# EUROPÄISCHE PATENTSCHRIFT

(11) **EP 3 619 057 B1**
(45) Veröffentlichungstag und Bekanntmachung des Hinweises auf die Patenterteilung: **13.01.2021**
(21) Anmeldenummer: 18709316.6
(22) Anmeldetag: 01.03.2018
(51) Int. Cl.: B60C 11/03, B60C 11/16, B60C 11/11

(54) **FAHRZEUGLUFTREIFEN**
VEHICLE TYRE
PNEUMATIQUE DE VÉHICULE

(30) Priorität: 02.05.2017 DE 102017207316
(43) Veröffentlichungstag der Anmeldung: 11.03.2020
(73) Patentinhaber: Continental Reifen Deutschland GmbH, 30165 Hannover (DE)
(72) Erfinder: BOSSE, Stefan, 38108 Braunschweig (DE); SCHLITTENHARD, Jan, 30900 Wedemark (DE)
(74) Vertreter: Finger, Karsten
(86) Internationale Anmeldenummer: PCT/EP2018/055013
(87) Internationale Veröffentlichungsnummer: WO 2018/202341

(56) Entgegenhaltungen:
- EP-A1- 2 955 037
- EP-A1- 3 095 619
- WO-A1-2009/147046
- WO-A1-2011/057834
- DE-A1-102014 225 047
- JP-A- 2016 166 014

## Beschreibung

Die Erfindung betrifft einen Fahrzeugluftreifen mit einem Laufstreifen mit durch Rillen voneinander getrennten Profilpositiven, beispielsweise Profilblöcken oder Profilbändern, in welchen jeweils zumindest ein Spike in einem Spikeloch positioniert ist, wobei zumindest an in Umfangsrichtung gegenüber befindlichen Seiten des Spikes innerhalb der Profilpositive endende Vertiefungen zur Aufnahme der beim Kratzen des Spikes auf Eis entstehenden Eispartikel ausgebildet sind.

Es ist bekannt und üblich, Laufstreifen von Fahrzeugluftreifen mit Spikes zu versehen, um unter winterlichen Fahrbedingungen die Kraftübertragung des Reifens auf schnee- und/oder eisbedeckten Fahrbahnen zu erhöhen. Die allgemeine Wirkungsweise von bespikten Reifen beruht dabei auf mehreren Effekten. Zum einen dringen Spikes in auf der Fahrbahn befindliches Eis ein und verzahnen sich in diesem mechanisch. Bei Brems- und Traktionsvorgängen treten darüber hinaus Relativbewegungen (Schlupf) zwischen dem Fahrzeugluftreifen und der eisbedeckten Fahrbahn auf, bei welchen die Spikes durch das Eis gezogen werden und dabei Rinnen in die Eisoberfläche fräsen. Die dabei anfallenden Eispartikel - Eisspäne oder Eismehl - sammeln sich häufig um den jeweiligen Spike an, wodurch sowohl die Eisgriffwirkung des Spikes als auch die Eisgriffwirkung des den Spike umgebenden Gummimaterials des Laufstreifens leidet.

Um den negativen Auswirkungen der anfallenden Eispartikel entgegenzuwirken, ist es bekannt, zur Aufnahme der Eispartikel in unmittelbarer Nähe zum Spike seichte Vertiefungen als Ableitkanäle bzw. Reservoire vorzusehen. Derartige Ableitkanäle oder Reservoire sind in unterschiedlichen Ausgestaltungen bekannt.

Ein Reifen der eingangs genannten Art ist beispielsweise aus der DE 10 2014 225 047 A1 bekannt. Die zur Aufnahme der Eispartikel vorgesehenen Vertiefungen weisen einen über den Großteil ihrer Umfangserstreckung verlaufenden Hauptabschnitt und einen an diesen anschließenden Endabschnitt auf. Im Hauptabschnitt nehmen die Breite und die Tiefe der Vertiefungen mit zunehmender Entfernung vom Spike zu. Im Endabschnitt nehmen die Breite und die Tiefe der Vertiefungen mit zunehmender Entfernung vom Spike ab. Beim Fahren auf glattem Eis sollte die Funktion dieser Vertiefungen als Reservoire für die Eispartikel erhalten bleiben, denn die Eispartikel können in diesem Fall ungehindert und damit ausreichend schnell vom Spike in die Bereiche der Vertiefungen mit größerer Querschnittsfläche transportiert werden. Beim Fahren auf aufgerautem Eis oder auf mit Schnee bedecktem Eis, kann der Schnee bzw. können etwaige bereits vorhandene Eispartikel die Transportbewegung der vom Spike aus der Eisoberfläche gefrästen Eispartikel hemmen, sodass die Vertiefungen verstopfen und übergehen, bevor sie vollständig bzw. im Wesentlichen vollständig mit Eispartikeln gefüllt sind. Außerdem verringert sich das Volumen dieser Vertiefungen mit zunehmendem Laufstreifenabrieb deutlich, sodass die Wirksamkeit der Vertiefungen schnell abnimmt.

Der Erfindung liegt daher die Aufgabe zugrunde, bei einem Reifen der eingangs genannten Art die Wirksamkeit der zur Aufnahme von Eispartikeln vorgesehenen Vertiefungen zu verbessern.

Die gestellte Aufgabe wird erfindungsgemäß dadurch gelöst, dass an den in Umfangsrichtung gegenüber befindlichen Seiten des Spikes jeweils eine einzige Vertiefung mit einer in Draufsicht umlaufenden Randzone und einer in Draufsicht innerhalb der Randzone befindlichen Kernzone ausgebildet ist, wobei die Kernzone gegenüber der Laufstreifenperipherie in radialer Richtung tiefer ist als die Randzone und die Tiefe der Kernzone in Umfangsrichtung zum Spike kontinuierlich zunimmt.

Die erfindungsgemäßen als Eisreservoire wirkenden Vertiefungen weisen somit zwei unterschiedlich tiefe Bereiche auf und sind daher zweistufig ausgeführt. Die Kernzone weist ihre größte Tiefe in der Nähe des jeweiligen Spikes auf, sodass auch größere Mengen an Eispartikeln in unmittelbarer Nähe des Spikes von den Vertiefungen aufgenommen werden. Die Transportwege der Eispartikel sind daher deutlich kürzer als bei den bisher bekannten als Eis-Reservoire dienenden Vertiefungen, sodass die Aufnahmeeigenschaften der Vertiefungen gegenüber bekannten Vertiefungen verbessert sind. Die im Bereich der Kernzone aufgenommenen Eispartikel werden durch den speziellen Tiefenverlauf der Kernzone genau so zuverlässig wie die im Bereich der Randzone angesammelten Eispartikel beim Verlassen der Bodenaufstandsfläche aus den Vertiefungen ausgeworfen ("Selbstreinigung"). Die Eisgriffwirkung des Spikes sowie die Eisgriffwirkung des den Spike umgebenden Gummimaterials sind daher deutlich verbessert. Mit fortschreitendem Laufstreifenabrieb nimmt das Volumen der Vertiefungen durch ihre zweistufige Ausführung nur langsam ab, sodass die als Eisreservoire wirkenden Vertiefungen besonders lange wirksam sind. Durch die etwas seichter ausgeführte Randzone können die Vertiefungen besonders nah am Spike positioniert werden, wobei die Steifigkeit des den Spike unmittelbar umgebenden Gummimateriales zumindest im Wesentlichen erhalten bleibt. Durch die Randzone sind ferner die Aufnahmeeigenschaften der Vertiefungen weiter verbessert, wobei gleichzeitig ein zuverlässiger Sitz des Spikes im Spikeloch ermöglicht ist.

Gemäß einer bevorzugten Ausführungsvariante weist die Kernzone der Vertiefungen einen zur radialen Richtung unter einem konstanten Winkel geneigten Boden auf, wodurch in den Vertiefungen aufgenommene Eispartikel besonders zuverlässig ausgeworfen werden. Zusätzlich ist dadurch auch die Aufnahme von Eispartikeln bei Fahrzeugluftreifen mit kleinen Schräglaufwinkeln erleichtert.

Bevorzugter Weise beträgt die Tiefe der Kernzone gegenüber der Laufstreifenperipherie an ihrer tiefsten Stelle 1,8 mm bis 2,0 mm, insbesondere 2,0 mm. Ebenfalls ist es bevorzugt, wenn die Tiefe der Kernzone gegenüber der Laufstreifenperipherie an ihrer seichtesten Stelle 0,8 mm bis 1,2 mm, insbesondere 1,0 mm, beträgt. Derartige Tiefenbereiche sind im Hinblick auf die Größe und die Menge der üblicherweise anfallenden Eispartikel ideal, sodass die Eispartikel besonders zuverlässig in den Vertiefungen aufgenommen und aus diesem beim Austreten aus der Bodenaufstandsfläche wieder ausgeworfen werden.

Bei einer weiteren bevorzugten Ausführungsvariante weist die Randzone der Vertiefung in radialer Richtung eine konstante Tiefe von 0,4 mm bis 0,6 mm, insbesondere von 0,5 mm, auf.

Gemäß einer weiteren bevorzugten Ausführungsvariante sind die bei einem Spike ausgebildeten Vertiefungen in Draufsicht jeweils spiegelsymmetrisch zu einer von der Umfangsrichtung und der radialen Richtung aufgespannten, durch die Hauptachse des Spikes verlaufenden Ebene ausgeführt. Diese Maßnahme ist für eine gute Einbettung des Spikes im Gummimaterial des Laufsteifens vorteilhaft und vergleichmäßigt die Zugspannung in dem den Spike umgebenden Gummimaterial.

Die Menge der Eispartikel, die in den Vertiefungen aufgenommen werden können, ist weiter erhöht, wenn gemäß einer bevorzugten Ausführungsvariante die Kernzone in Draufsicht die Gestalt der Vertiefung in verkleinerter Form aufweist und die Randzone eine konstante Breite von 0,5 mm bis 1,2 mm aufweist.

Gemäß einer bevorzugten Ausführungsvariante weist zumindest eine der Vertiefungen in Draufsicht die Form eines in Umfangsrichtung asymmetrisch langgezogenen Sechseckes auf, wobei die näher beim Spike befindliche Hälfte des Sechseckes langgezogen ist und sich über 60% bis 90% der in Umfangsrichtung ermittelten Länge der Vertiefung erstreckt. Bevorzugter Weise weist diese Vertiefung an der breitesten Stelle in axialer Richtung eine Breite von 5,0 mm bis 10,0 mm auf.

Gemäß einer weiteren bevorzugten Ausführungsvariante weist die Vertiefung in Draufsicht die Form eines gleichschenkeligen Trapezes, jedoch mit einer beim Spike zentral eingebuchteten Basis, auf. Dadurch werden die beim Spike anfallenden Eispartikel besonders zuverlässig unmittelbar in der Kernzone der Vertiefung aufgefangen. In diesem Zusammenhang ist es ferner von Vorteil, wenn die eingebuchtete Basis der Vertiefung durch eine in Draufsicht kreisbogenförmige Begrenzungskante begrenzt ist, welche eine Bogenlänge von 40% bis 45% des Umfanges des dem Kreisbogen zugrundeliegenden Kreises aufweist.

Bevorzugter Weise verlaufen die die Schenkel des Trapezes der Vertiefung bildenden Begrenzungskanten an der Blockoberfläche in Draufsicht zur axialen Richtung unter einem Winkel von vorzugsweise 45° bis 75°, insbesondere von 50° bis 65°. Ferner ist es bevorzugt, wenn die Vertiefung in axialer Richtung eine an der gedachten Basis des Trapezes ermittelte Breite von 7,0 mm bis 12,5 mm, insbesondere von 11,0 mm bis 12,0 mm, aufweist.

Bei einer in Draufsicht trapezförmigen Vertiefung ist es ferner von Vorteil, wenn die Kernzone in Draufsicht rechteckig ist und in axialer Richtung eine Länge von vorzugsweise 2,5 mm bis 3,5 mm sowie in Umfangsrichtung eine Breite von vorzugsweise 0,8 mm bis 2,4 mm aufweist.

Für eine ausgewogenen Steifigkeit des Gummimaterial im Einbettungsbereich des Spikes ist es von Vorteil, wenn gemäß einer weiteren bevorzugten Ausführungsvariante axial seitlich des Spikes jeweils eine weitere innerhalb des Profilpositives endende Vertiefung ausgebildet ist, wobei die Vertiefungen durch den Spike getrennt einander diametral gegenüberliegen und in Draufsicht spiegelsymmetrisch zu einer von der Umfangsrichtung und der radialen Richtung aufgespannten, durch die Hauptachse des Spikes verlaufende Ebene ausgeführt sind.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf einen Ausschnitt eines zu einem Laufstreifen eines Fahrzeugluftreifens gehörenden Profilblockes im Bereich eines Spikes mit einer Ausführungsvariante der Erfindung,
Fig. 1a einen Schnitt entlang der Linie Ia-Ia der Fig. 1,
Fig. 2 eine Draufsicht auf einen Ausschnitt eines zu einem Laufstreifen eines Fahrzeugluftreifens gehörenden Profilblockes im Bereich eines Spikes mit einer zweiten Ausführungsvariante der Erfindung,
Fig. 2a einen Schnitt entlang der Linie IIa-IIa der Fig. 2.

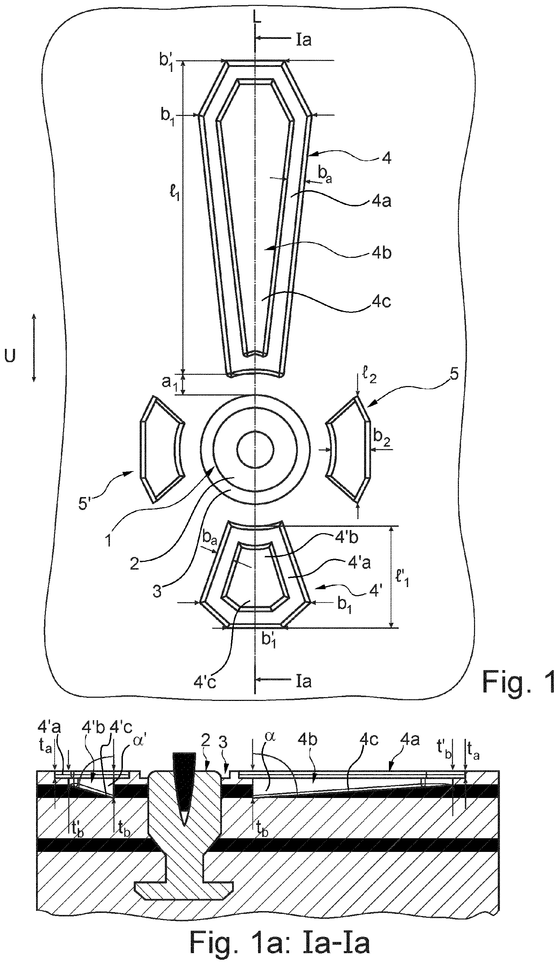

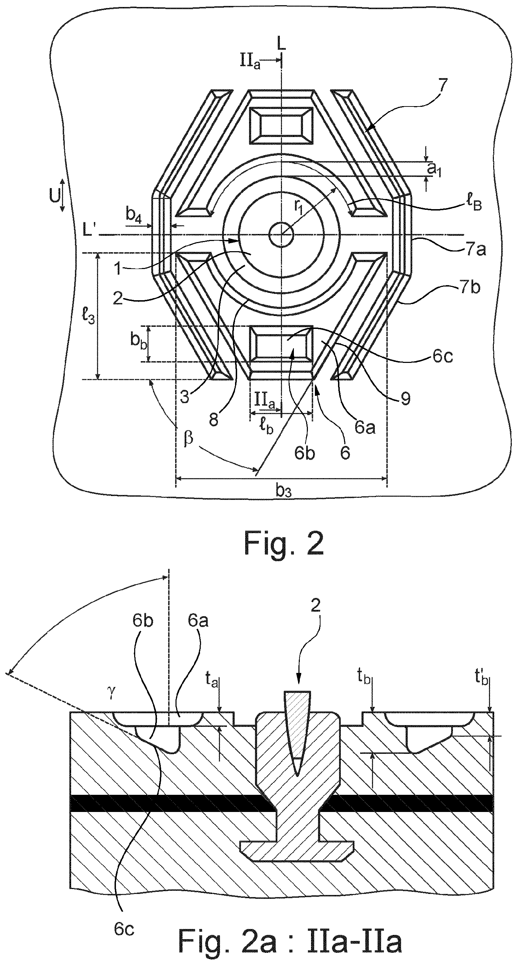

Erfindungsgemäß ausgeführte Fahrzeugluftreifen sind Winterreifen in Radialbauart für Personenkraftwagen, Vans oder Light-Trucks. Der in Fig. 1 und Fig. 2 jeweils gezeigte Profilblock ist in an sich bekannter Weise von in den Figuren nicht gezeigten Rillen, beispielsweise Umfangs- und Querrillen, begrenzt sowie vorzugsweise mit in den Figuren ebenfalls nicht gezeigten insbesondere in bekannter Weise ausgeführten Einschnitten versehen. Die Umfangsrichtung des Reifens bzw. Laufstreifens ist in Fig. 1 und Fig. 2 jeweils durch einen Doppelpfeil U angedeutet.

In jedem Profilblock ist ein Spikeloch 1 ausgebildet, in welches ein aus einem Spikekörper und einem Spikepin bestehender Spike 2 eingesetzt und verankert ist. Das Spikeloch 1 ist bei den gezeigten Ausführungsbeispielen von einer oberflächlichen und in Draufsicht ringförmigen Vertiefung 3 umlaufen, welche bei der Vulkanisation von einem Halteelement des das Spikeloch 1 ausformenden "Mold-Pins" mitgebildet wird und in radialer Richtung beispielsweise eine Tiefe von 1,0 mm aufweist. Das Haltelement ist insbesondere ein sogenannter "Rotations-Lock", mittels welchem der Mold-Pin an der Vulkanisationsform austauschbar befestigt ist.

Bei der in Fig. 1 gezeigten Variante sind im Profilblock um das Spikeloch 1 bzw. um den Spike 2 vier oberflächliche Vertiefungen 4, 4', 5, 5' ausgebildet, welche als Reservoire zur Aufnahme der beim Abrollen des Reifens auf eisigem Untergrund absplitternden Eispartikel dienen. Jede Vertiefung 4, 4', 5, 5' weist von der ringförmigen Vertiefung 3 einen Mindestabstand a₁ von 0,5 mm bis 1,5 mm auf.

Die Vertiefung 4 erstreckt sich bezogen auf den Spike 2 in die eine Umfangsrichtung, die Vertiefung 4' erstreckt bezogen auf den Spike 2 in die andere Umfangsrichtung, wobei die Vertiefungen 4, 4' in Draufsicht jeweils symmetrisch zu einer von der Umfangsrichtung und der radialen Richtung aufgespannten, durch die Hauptachse des Spikes 2 verlaufenden Ebene spiegelsymmetrisch ausgeführt sind. Diese Ebene ist in Fig. 1 als Linie L angedeutet, welche mit der Schnittlinie Ia-Ia zusammenfällt.

Die Vertiefung 4 weist in Umfangsrichtung an der Laufstreifenperipherie entlang der Linie L eine Länge l₁ von 5,0 mm bis 40,0 mm auf, wobei die Länge l₁ derart an die jeweilige Position des Spikes 2 im Profilblock angepasst ist, dass die Vertiefung 4 von der in Umfangsrichtung nächstliegenden Blockkante in einem Abstand von mindestens 2,0 mm endet. Ferner weist die Vertiefung 4 in Draufsicht im Wesentlichen die Form eines in Umfangsrichtung langgezogenen Sechseckes auf, wobei die eine näher beim Spike 2 befindliche Hälfte des Sechseckes langgezogen ist und sich über 60% bis 90% der Länge l₁ erstreckt. Die Vertiefung 4 weist in Draufsicht somit eine deltoidähnliche Gestalt auf. In axialer Richtung weist die Vertiefung 4 an ihrer breitesten Stelle eine Breite b₁ von 5,0 mm bis 10,0 mm, insbesondere von 6,0 mm, und an ihren in Umfangsrichtung liegenden Enden jeweils eine Breite b₁' von 2,0 mm bis 4,0 mm, insbesondere von 3,0 mm, auf.

Die Vertiefung 4 weist eine Randzone 4a und eine innerhalb der Randzone 4a befindliche und von dieser umlaufene Kernzone 4b auf. Die Randzone 4a weist eine an der Laufstreifenperipherie gemessene konstante Breite bₐ von 0,5 mm bis 1,2 mm, insbesondere von 1,0 mm, sowie in radialer Richtung eine konstante Tiefe tₐ (Fig. 1a) von 0,4 mm bis 0,6 mm, vorzugsweise von 0,5 mm, auf. Die Kernzone 4b besitzt in Draufsicht die Gestalt der Vertiefung 4 in verkleinerter Form und weist einen Boden 4c auf, welcher zur radialen Richtung derart unter einem konstanten Winkel α geneigt ist, dass die Tiefe der Kernzone 4b in Umfangsrichtung zum Spike 2 kontinuierlich zunimmt. An ihrem vom Spike 2 weiter entfernt befindlichen Ende weist die Kernzone 4b gegenüber dem Niveau der Laufstreifenperipherie in radialer Richtung eine Tiefe t_{b}' (Fig. 1a) von 0,8 mm bis 1,2 mm, insbesondere von 1,0 mm, auf. An ihrem beim Spike 2 liegenden Ende weist die Kernzone 4b gegenüber dem Niveau der Laufstreifenperipherie in radialer Richtung eine Tiefe t_{b} (Fig. 1a) von 1,8 mm bis 2,0 mm, insbesondere von 2,0 mm, auf.

Die Vertiefung 4' weist in Umfangsrichtung entlang der Linie L eine Länge l₁' von 5,0 mm bis 40,0 mm auf, wobei die Länge l₁' derart an die jeweilige Position des Spikes 2 im Profilblock angepasst ist, dass die Vertiefung 4' vor der in Umfangsrichtung nächstliegenden Blockkante in einen Abstand von mindestens 2,0 mm endet. Beim gezeigten Ausführungsbeispiel ist die Länge l₁' der Vertiefung 4' deutlich kleiner als die Länge l₁ der Vertiefung 4. In Draufsicht weist die Vertiefung 4' eine in Umfangsrichtung gestauchte Form der Gestalt der Vertiefung 4 auf. In axialer Richtung weist die Vertiefung 4' an ihrer breitesten Stelle die bereits erwähnte Breite b₁ auf. An ihren in Umfangsrichtung liegenden Enden weist die Vertiefung 4 in axialer Richtung jeweils die ebenfalls bereits erwähnte Breite b₁' auf.

Die Vertiefung 4' weist eine Randzone 4'a und eine innerhalb der Randzone 4'a befindliche und von dieser umlaufene Kernzone 4'b auf. Die Randzone 4'a weist die bereits erwähnte Breite bₐ von 0,5 mm bis 1,2 mm, insbesondere von 1,0 mm, sowie ferner in radialer Richtung die bereits erwähnte konstante Tiefe tₐ (Fig. 1a) von 0,4 mm bis 0,6 mm, insbesondere von 0,5 mm, auf. Die Kernzone 4'b weist in Draufsicht in verkleinerter Form die Gestalt der Vertiefung 4' sowie ferner einen Boden 4'c auf, welcher zur radialen Richtung derart unter einem konstanten Winkel α' geneigt ist, dass die Tiefe der Kernzone 4'b in Umfangsrichtung zum Spike 2 kontinuierlich zunimmt. An ihrem vom Spike 2 weiter entfernt befindlichen Ende weist die Kernzone 4'b gegenüber dem Niveau der Laufstreifenperipherie in radialer Richtung die bereits erwähnte Tiefe t_{b}' (Fig. 1a) von 0,8 mm bis 1,2 mm, insbesondere von 1,0 mm, auf. An ihrem beim Spike 2 liegenden Ende weist die Kernzone 4'b gegenüber dem Niveau der Laufstreifenperipherie in radialer Richtung die ebenfalls bereits erwähnte Tiefe t_{b} (Fig. 1a) von 1,8 mm bis 2,0 mm, insbesondere von 2,0 mm, auf.

Die Vertiefungen 5, 5' liegen axial seitlich des Spikes 2 sowie einander ferner durch den Spike 2 getrennt diametral gegenüber und sind in Draufsicht bezüglich der Linie L zueinander spiegelsymmetrisch ausgeführt. Jede Vertiefung 5, 5' weist in Draufsicht im Wesentlichen die Form eines Kreisringabschnittes auf, wobei anstelle des bezogen auf den Spike 2 äußeren Kreisbogens an der Profilblockoberfläche eine in Umfangsrichtung orientierte Kante und zwei an die unterschiedlichen Enden dieser Kante anschließende in Draufsicht gegensinnig zur Umfangsrichtung geneigte Kanten vorgesehen sind. Jede Vertiefung 5, 5' weist eine im Wesentlichen konstante Breite b₂ von 1,0 bis 2,0 mm, ferner in Umfangsrichtung an ihrer längsten Stelle eine Länge l₂ von 4,0 mm bis 6,0 mm und in radialer Richtung eine vorzugsweise konstante Tiefe von 0,5 mm bis 1,5 mm auf.

Bei der Variante gemäß Fig. 2 sind im Profilblock um das Spikeloch 1 bzw. um den Spike 2 vier oberflächliche Vertiefungen - zwei Vertiefungen 6 und zwei Vertiefungen 7 - ausgebildet, welche ebenfalls als Reservoire zur Aufnahme der beim Abrollen des Reifens auf eisigem Untergrund absplitternden Eispartikel dienen.

Jede Vertiefung 6 weist von der bereits erwähnten ringförmigen Vertiefung 3 ebenfalls den Mindestabstand a₁ von 0,5 mm bis 1,5 mm auf. Die eine Vertiefung 6 liegt bezogen auf den Spike 2 in der einen Umfangsrichtung benachbart zum Spike 2, die andere Vertiefung 6 liegt bezogen auf den Spike 2 in der anderen Umfangsrichtung benachbart zum Spike 2, wobei die beiden Vertiefungen 6 in Draufsicht jeweils bezogen auf eine von der Umfangsrichtung und der radialen Richtung aufgespannten, durch die Hauptachse des Spikes 2 verlaufenden Ebene spiegelsymmetrisch ausgeführt sind. Diese Ebene ist in Fig. 2 als Linie L angedeutet, welche mit der Schnittlinie IIa-IIa zusammenfällt. Ferner ist die eine Vertiefung 6 zur anderen Vertiefung 6 bezogen auf eine von der axialen Richtung und der radialen Richtung aufgespannten Ebene, welche in Fig. 2 einer Linie L' entspricht, in Draufsicht spiegelsymmetrisch ausgeführt.

Jede Vertiefung 6 weist in Draufsicht die Form eine gleichschenkeligen Trapezes auf, jedoch mit einer beim Spike 2 bzw. der ringförmigen Vertiefung 3 zentral eingebuchteten Basis, welche im Bereich der Einbuchtung an der Blockoberfläche durch eine in Draufsicht kreisbogenförmige Begrenzungskante 8 begrenzt ist. Jede Begrenzungskante 8 verläuft in Draufsicht konzentrisch zur Hauptachse des Spikes 2, sodass die zwei Begrenzungskanten 8 der beiden Vertiefungen 6 entlang eines gemeinsamen Radius r₁ verlaufen, wobei jede Begrenzungskante 8 eine Bogenlänge l_{B} von 40% bis 45% des Umfanges des Kreises mit dem Radius r₁ aufweist. Die die Schenkel des Trapezes der Vertiefung 6 bildenden Begrenzungskanten 9 verlaufen in Draufsicht zur axialen Richtung unter einem Winkel β von 45° bis 75°, insbesondere von 50° bis 65°. Jede Vertiefung 6 weist in Umfangsrichtung eine Länge l₁ von 7,0 mm bis 9,0 mm, insbesondere von 8,0 mm, auf. In axialer Richtung weist die Vertiefung 6 eine an der gedachten Basis des Trapezes ermittelten Breite b₃ von 7,0 mm bis 12,5 mm, insbesondere von 11,0 mm bis 12,0 mm, auf.

Die Vertiefung 6 weist eine Randzone 6a und eine innerhalb der Randzone 6a befindliche und von dieser umlaufene in Draufsicht rechteckige Kernzone 6b auf. Die Randzone 6a weist in radialer Richtung ebenfalls die bereits erwähnte konstante Tiefe tₐ (Fig. 2a) von 0,4 mm bis 0,6 mm auf. Die rechteckige Kernzone 6b weist in Draufsicht in axialer Richtung eine Länge l_{b} von 2,5 mm bis 3,5 mm, in Umfangsrichtung eine Breite b_{b} von 0,8 mm bis 2,4 mm, insbesondere 1,0 mm, auf und ist in radialer Richtung durch einen Boden 6c begrenzt, welcher zur radialer Richtung derart unter einem kontanten Winkel γ geneigt ist, dass die Tiefe der Kernzone 6b in Umfangsrichtung zum Spike 2 liegenden Ende kontinuierlich zunimmt. An ihrem vom Spike 2 weiter entfernt befindlichen Ende weist die Kernzone 6b gegenüber dem Niveau der Laufstreifenperipherie in radialer Richtung die bereits erwähnte Tiefe t_{b}' (Fig. 2a) von 0,8 mm bis 1,2 mm, insbesondere von 1,0 mm, auf. An ihrem beim Spike 2 liegenden Ende weist die Kernzone 4b gegenüber dem Niveau der Laufstreifenperipherie in radialer Richtung die ebenfalls bereits erwähnte Tiefe t_{b} (Fig. 2a) von 1,8 mm bis 2,0 mm, insbesondere von 2,0 mm, auf.

Die Vertiefungen 7 liegen bezogen auf die Hauptachse des Spikes 2 außerhalb der Vertiefungen 6 sowie einander durch den Spike 2 getrennt diametral gegenüber. In Draufsicht sind die Vertiefungen 7 bezüglich der Linie L zueinander spiegelsymmetrisch und es ist ferner jede Vertiefung 7 bezüglich der Linie L' spiegelsymmetrisch ausgeführt. Jede Vertiefung 7 weist an der Laufstreifenperipherie eine konstante Breite b₄ von 1,0 mm bis 2,0 mm auf. Ferner setzt sich jede Vertiefung 7 in Draufsicht aus einem in Umfangsrichtung orientierten mittleren Abschnitt 7a und zwei Randabschnitten 7b zusammen, welche sich parallel zu den die Schenkel des Trapezes der Vertiefungen 6 bildenden Begrenzungskanten 9 und damit unter dem bereits erwähnten Winkel β erstrecken und in Umfangsrichtung gemeinsam mit den Vertiefungen 6 enden.

### Bezugszeichenliste

- 1 ...........................: Spikeloch
- 2 ...........................: Spike
- 3 ...........................: Vertiefung
- 4, 4' ......................: Vertiefung
- 4a, 4'a...................: Randzone
- 4b, 4'b..................: Kernzone
- 4c,4'c...................: Boden
- 5, 5' ......................: Vertiefung
- 6 ...........................: Vertiefung
- 6a .........................: Randzone
- 6b .........................: Kernzone
- 6c .........................: Boden
- 7 ...........................: Vertiefung
- 7a .........................: mittlerer Abschnitt
- 7b .........................: Randabschnitt
- 8, 9 .......................: Begrenzungskante
- a₁ ..........................: Mindestabstand
- bₐ, b_{b} .....................: Breite
- b₁, b₁', b₂, b₃, b₄....: Breite
- l₁, l₁, l₂, l₃, l_{b} ........: Länge
- l_{B} ..........................: Bogenlänge
- L, L' .....................: Linie
- r₁ ..........................: Radius
- tₐ, t_{b}, t_{b}' .................: Tiefe
- U ..........................: Doppelpfeil (Umfangsrichtung)
- α, α', β, γ ..............: Winkel

## Patentansprüche

1. Fahrzeugluftreifen mit einem Laufstreifen mit durch Rillen voneinander getrennten Profilpositiven, beispielsweise Profilblöcken oder Profilbändern, in welchen jeweils zumindest ein Spike (2) in einem Spikeloch (1) positioniert ist, wobei zumindest an in Umfangsrichtung (U) gegenüber befindlichen Seiten des Spikes (2) innerhalb der Profilpositive endende Vertiefungen (4, 4', 6) zur Aufnahme der beim Kratzen des Spikes (2) auf Eis entstehenden Eispartikel ausgebildet sind,
**dadurch gekennzeichnet,**
**dass** an den in Umfangsrichtung (U) gegenüber befindlichen Seiten des Spikes (2) jeweils eine einzige Vertiefung (4, 4', 6) mit einer in Draufsicht umlaufenden Randzone (4a, 4'a, 6a) und einer in Draufsicht innerhalb der Randzone (4a, 4'a, 6a) befindlichen Kernzone (4b, 4'b, 6b) ausgebildet ist, wobei die Kernzone (4b, 4'b, 6b) gegenüber der Laufstreifenperipherie in radialer Richtung tiefer ist als die Randzone (4a, 4'a, 6a) und die Tiefe (t_{b}, t_{b}') der Kernzone (4b, 4'b, 6b) in Umfangsrichtung (U) zum Spike (2) kontinuierlich zunimmt.

2. Fahrzeugluftreifen nach Anspruch 1, **dadurch gekennzeichnet, dass** die Kernzone (4b, 4'b, 6b) der Vertiefungen (4, 4', 6) einen zur radialen Richtung unter einem konstanten Winkel (α, α') geneigten Boden (4c, 4'c, 6c) aufweist.

3. Fahrzeugluftreifen nach Anspruch 1 oder 2, **dadurch gekennzeichnet, dass** die Tiefe (t_{b}) der Kernzone (4b, 4'b, 6b) gegenüber der Laufstreifenperipherie an ihrer tiefsten Stelle 1,8 mm bis 2,0 mm, insbesondere 2,0 mm, beträgt.

4. Fahrzeugluftreifen nach einem der Ansprüche 1 bis 3, **dadurch gekennzeichnet, dass** die Tiefe (t_{b}') der Kernzone (4b, 4'b, 6b) gegenüber der Laufstreifenperipherie an ihrer seichtesten Stelle 0,8 mm bis 1,2 mm, insbesondere 1,0 mm, beträgt.

5. Fahrzeugluftreifen nach einem der Ansprüche 1 bis 4, **dadurch gekennzeichnet, dass** die Randzone (4a, 4'a, 6a) der Vertiefung (4, 6) in radialer Richtung eine konstante Tiefe (tₐ) von 0,4 mm bis 0,6 mm, insbesondere von 0,5 mm, aufweist.

6. Fahrzeugluftreifen nach einem der Ansprüche 1 bis 5, **dadurch gekennzeichnet, dass** die bei einem Spike (2) ausgebildeten Vertiefungen (4, 4', 6) in Draufsicht jeweils spiegelsymmetrisch zu einer von der Umfangsrichtung (U) und der radialen Richtung aufgespannten, durch die Hauptachse des Spikes (2) verlaufenden Ebene (L) ausgeführt sind.

7. Fahrzeugluftreifen nach einem der Ansprüche 1 bis 6, **dadurch gekennzeichnet, dass** die Kernzone (4b, 4'b) in Draufsicht die Gestalt der Vertiefung (4, 4') in verkleinerter Form aufweist und die Randzone (4a, 4'a) eine konstante Breite (bₐ) von 0,5 mm bis 1,2 mm aufweist.

8. Fahrzeugluftreifen nach einem der Ansprüche 1 bis 7, **dadurch gekennzeichnet, dass** zumindest eine der Vertiefungen (4) in Draufsicht die Form eines in Umfangsrichtung (U) asymmetrisch langgezogenen Sechseckes aufweist, wobei die näher beim Spike (2) befindliche Hälfte des Sechseckes langgezogen ist und sich über 60% bis 90% der in Umfangsrichtung (U) ermittelten Länge (l₁) der Vertiefung (4) erstreckt.

9. Fahrzeugluftreifen nach Anspruch 8, **dadurch gekennzeichnet, dass** die Vertiefung (4) an der breitesten Stelle in axialer Richtung eine Breite (b₁) von 5,0 mm bis 10,0 mm aufweist.

10. Fahrzeugluftreifen nach einem der Ansprüche 1 bis 7, **dadurch gekennzeichnet, dass** die Vertiefung (6) in Draufsicht die Form eines gleichschenkeligen Trapezes, jedoch mit einer beim Spike (2) zentral eingebuchteten Basis, aufweist.

11. Fahrzeugluftreifen nach Anspruch 10, **dadurch gekennzeichnet, dass** die eingebuchtete Basis der Vertiefung (6) durch eine in Draufsicht kreisbogenförmige Begrenzungskante (8) begrenzt ist, welche eine Bogenlänge (l_{B}) von 40% bis 45% des Umfanges des dem Kreisbogen zugrundeliegenden Kreises aufweist.

12. Fahrzeugluftreifen nach Anspruch 10, **dadurch gekennzeichnet, dass** die die Schenkel des Trapezes der Vertiefung (6) bildenden Begrenzungskanten (9) an der Blockoberfläche in Draufsicht zur axialen Richtung unter einem Winkel (β) von vorzugsweise 45° bis 75°, insbesondere von 50° bis 65°, verlaufen.

13. Fahrzeugluftreifen nach einem der Ansprüche 10 bis 12, **dadurch gekennzeichnet, dass** die Vertiefung (6) in axialer Richtung eine an der gedachten Basis des Trapezes ermittelte Breite (b₃) von 7,0 mm bis 12,5 mm, insbesondere von 11,0 mm bis 12,0 mm, aufweist.

14. Fahrzeugluftreifen nach einem der Ansprüche 10 bis 13, **dadurch gekennzeichnet, dass** die Kernzone (6b) in Draufsicht rechteckig ist und in axialer Richtung eine Länge (l_{b}) von vorzugsweise 2,5 mm bis 3,5 mm sowie in Umfangsrichtung eine Breite (b_{b}) von vorzugsweise 0,8 mm bis 2,4 mm aufweist.

15. Fahrzeugluftreifen nach einem der Ansprüche 1 bis 14, **dadurch gekennzeichnet, dass** axial seitlich des Spikes (2) jeweils eine weitere innerhalb des Profilpositiven endende Vertiefung (5, 5', 7) ausgebildet ist, wobei die Vertiefungen (5, 5', 7) einander durch den Spike (2) getrennt diametral gegenüberliegen und in Draufsicht spiegelsymmetrisch zu einer von der Umfangsrichtung (U) und der radialen Richtung aufgespannten, durch die Hauptachse des Spikes (2) verlaufende Ebene (L) ausgeführt sind.

## Claims

1. Pneumatic vehicle tyre, comprising a tyre tread with profile positives, for example profile blocks or profile strips, which are separated from one another by grooves and in which at least one spike (2) is respectively positioned in a spike hole (1), recesses (4, 4', 6) which end within the profile positives and are intended to receive the ice particles created as the spike (2) scratches on ice being formed at least on sides of the spike (2) opposite one another in the circumferential direction (U),
**characterized in that**
a single recess (4, 4', 6) with an edge zone (4a, 4'a, 6a) that runs around peripherally in plan view and a core zone (4b, 4'b, 6b) located inside the edge zone (4a, 4'a, 6a) in plan view is respectively formed on the sides of the spike (2) opposite one another in the circumferential direction (U), the core zone (4b, 4'b, 6b) with respect to the periphery of the tread being deeper than the edge zone (4a, 4'a, 6a) in the radial direction, and the depth (t_{b}, t_{b}') of the core zone (4b, 4'b, 6b) increasing continuously towards the spike (2) in the circumferential direction (U).

2. Pneumatic vehicle tyre according to Claim 1, **characterized in that** the core zone (4b, 4'b, 6b) of the recesses (4, 4', 6) has a bottom (4c, 4'c, 6c) inclined at a constant angle (α, α') in relation to the radial direction.

3. Pneumatic vehicle tyre according to Claim 1 or 2, **characterized in that** the depth (t_{b}) of the core zone (4b, 4'b, 6b) with respect to the periphery of the tread at its deepest point is 1.8 mm to 2.0 mm, in particular 2.0 mm.

4. Pneumatic vehicle tyre according to one of Claims 1 to 3, **characterized in that** the depth (t_{b}') of the core zone (4b, 4'b, 6b) with respect to the periphery of the tread at its shallowest point is 0.8 mm to 1.2 mm, in particular 1.0 mm.

5. Pneumatic vehicle tyre according to one of Claims 1 to 4, **characterized in that** the edge zone (4a, 4'a, 6a) of the recess (4, 6) has in the radial direction a constant depth (tₐ) of 0.4 mm to 0.6 mm, in particular of 0.5 mm.

6. Pneumatic vehicle tyre according to one of Claims 1 to 5, **characterized in that** the recesses (4, 4' 6) formed for a spike (2) are respectively configured in plan view mirror-symmetrically in relation to a plane (L) which is defined by the circumferential direction (U) and the radial direction and runs through the main axis of the spike (2).

7. Pneumatic vehicle tyre according to one of Claims 1 to 6, **characterized in that** the core zone (4b, 4'b) has in plan view the shape of the recess (4, 4') in a form of reduced size and the edge zone (4a, 4'a) has a constant width (bₐ) of 0.5 mm to 1.2 mm.

8. Pneumatic vehicle tyre according to one of Claims 1 to 7, **characterized in that** at least one of the recesses (4) has in plan view the form of a hexagon that is elongated asymmetrically in the circumferential direction (U), the half of the hexagon that is closer to the spike (2) being elongated and extending over 60% to 90% of the length (l₁) of the recess (4) determined in the circumferential direction (U).

9. Pneumatic vehicle tyre according to Claim 8, **characterized in that** the recess (4) has at the widest point in the axial direction a width (b₁) of 5.0 mm to 10.0 mm.

10. Pneumatic vehicle tyre according to one of Claims 1 to 7, **characterized in that** the recess (6) has in plan view the form of an isosceles trapezium, but with a base indented centrally at the spike (2).

11. Pneumatic vehicle tyre according to Claim 10, **characterized in that** the indented base of the recess (6) is delimited by a delimiting edge (8) that is in the form of an arc of a circle in plan view and has an arc length (l_{B}) of 40% to 45% of the circumference of the circle on which the arc is based.

12. Pneumatic vehicle tyre according to Claim 10, **characterized in that** the delimiting edges (9) forming the sides of the trapezium of the recess (6) at the surface of the block run in plan view at an angle (β) of preferably 45° to 75°, in particular of 50° to 65°, in relation to the axial direction.

13. Pneumatic vehicle tyre according to one of Claims 10 to 12, **characterized in that** the recess (6) has in the axial direction a width (b₃), determined at the imaginary base of the trapezium, of 7.0 mm to 12.5 mm, in particular of 11.0 mm to 12.0 mm.

14. Pneumatic vehicle tyre according to one of Claims 10 to 13, **characterized in that** the core zone (6b) is rectangular in plan view and has in the axial direction a length (l_{b}) of preferably 2.5 mm to 3.5 mm and in the circumferential direction a width (b_{b}) of preferably 0.8 mm to 2.4 mm.

15. Pneumatic vehicle tyre according to one of Claims 1 to 14, **characterized in that** a further recess (5, 5', 7), ending within the profile positive, is formed axially to the side of the spike (2), the recesses (5, 5', 7) lying diametrically opposite one another, separated by the spike (2), and being configured in plan view mirror-symmetrically in relation to a plane (L) which is defined by the circumferential direction (U) and the radial direction and runs through the main axis of the spike (2).

## Revendications

1. Pneumatique de véhicule, comprenant une bande de roulement dotée d'éléments de sculpture positifs séparés les uns des autres par des sillons, par exemple des blocs de sculptures ou des bandes de sculptures, dans lesquels au moins un crampon (2) est positionné dans un trou à crampon (1), respectivement, dans lequel, au moins sur des côtés du crampon (2), situés à l'opposé dans la direction circonférentielle (U), des creux (4, 4', 6) se terminant à l'intérieur des éléments de sculpture positifs sont réalisés pour recevoir des particules de glace créées lorsque le crampon (2) raie la glace,
**caractérisé en ce que** sur les côtés du crampon (2) situés à l'opposé dans la direction circonférentielle (U), respectivement un seul creux (4, 4', 6) est réalisé avec une zone marginale (4a, 4'a, 6a) périphérique en vue de dessus et une zone centrale (4b, 4'b, 6b) se trouvant à l'intérieur de la zone marginale (4a, 4'a, 6a) en vue de dessus, la zone centrale (4b, 4'b, 6b) étant plus profonde par rapport à la périphérie de bande de roulement dans la direction radiale que la zone marginale (4a, 4'a, 6a), et la profondeur (t_{b}, t_{b}') de la zone centrale (4b, 4'b, 6b) augmentant en continu dans la direction circonférentielle (U) vers le crampon (2).

2. Pneumatique de véhicule selon la revendication 1, **caractérisé en ce que** la zone centrale (4b, 4'b, 6b) des creux (4, 4', 6) présente un fond (4c, 4'c, 6c) incliné selon un angle constant (α, α') par rapport à la direction radiale.

3. Pneumatique de véhicule selon la revendication 1 ou 2, **caractérisé en ce que** la profondeur (t_{b}) de la zone centrale (4b, 4'b, 6b) mesure par rapport à la périphérie de bande de roulement à son endroit le plus profond de 1,8 mm à 2,0 mm, en particulier 2,0 mm.

4. Pneumatique de véhicule selon l'une quelconque des revendications 1 à 3, **caractérisé en ce que** la profondeur (t_{b}') de la zone centrale (4b, 4'b, 6b) mesure par rapport à la périphérie de bande de roulement à son endroit le moins profond de 0,8 mm à 1,2 mm, en particulier 1,0 mm.

5. Pneumatique de véhicule selon l'une quelconque des revendications 1 à 4, **caractérisé en ce que** la zone marginale (4a, 4'a, 6a) du creux (4, 6) présente dans la direction radiale une profondeur constante (tₐ) de 0,4 mm à 0,6 mm, en particulier de 0,5 mm.

6. Pneumatique de véhicule selon l'une quelconque des revendications 1 à 5, **caractérisé en ce que** les creux (4, 4', 6) réalisés sur un crampon (2) sont réalisés en vue de dessus respectivement à symétrie spéculaire par rapport à un plan (L) formé par la direction circonférentielle (U) et la direction radiale et passant par l'axe principal du crampon (2).

7. Pneumatique de véhicule selon l'une quelconque des revendications 1 à 6, **caractérisé en ce que** la zone centrale (4b, 4'b) présente en vue de dessus la configuration du creux (4, 4') en format réduit et la zone marginale (4a, 4'a) présente une largeur constante (bₐ) de 0,5 mm à 1,2 mm.

8. Pneumatique de véhicule selon l'une quelconque des revendications 1 à 7, **caractérisé en ce qu'**au moins l'un des creux (4) présente en vue de dessus la forme d'un hexagone allongé de manière asymétrique dans la direction circonférentielle (U), la moitié de l'hexagone plus proche du crampon (2) étant allongée et s'étendant sur 60 % à 90 % de la longueur (l₁) du creux (4), déterminée dans la direction circonférentielle (U).

9. Pneumatique de véhicule selon la revendication 8, **caractérisé en ce que** le creux (4) présente à l'endroit le plus large dans la direction axiale une largeur (b₁) de 5,0 mm à 10,0 mm.

10. Pneumatique de véhicule selon l'une quelconque des revendications 1 à 7, **caractérisé en ce que** le creux (6) présente en vue de dessus la forme d'un trapèze isocèle, mais avec une base indentée au milieu au niveau du crampon (2).

11. Pneumatique de véhicule selon la revendication 10, **caractérisé en ce que** la base indentée du creux (6) est limitée par un bord de limitation (8) en arc de cercle en vue de dessus qui présente une longueur d'arc (l_{B}) de 40 % à 45 % de la circonférence du cercle à la base de l'arc de cercle.

12. Pneumatique de véhicule selon la revendication 10, **caractérisé en ce que** les bords de limitation (9) formant les branches du trapèze du creux (6) s'étendent à la surface de bloc en vue de dessus par rapport à la direction axiale selon un angle (β) de préférence de 45° à 75°, en particulier de 50° à 65°.

13. Pneumatique de véhicule selon l'une quelconque des revendications 10 à 12, **caractérisé en ce que** le creux (6) présente dans la direction axiale une largeur (b₃) déterminée au niveau de la base imaginaire du trapèze de 7,0 mm à 12,5 mm, en particulier de 11,0 mm à 12,0 mm.

14. Pneumatique de véhicule selon l'une quelconque des revendications 10 à 13, **caractérisé en ce que** la zone centrale (6b) est rectangulaire en vue de dessus et présente dans la direction axiale une longueur (l_{b}) de préférence de 2,5 mm à 3,5 mm ainsi que dans la direction circonférentielle une largeur (b_{b}) de préférence de 0,8 mm à 2,4 mm.

15. Pneumatique de véhicule selon l'une quelconque des revendications 1 à 14, **caractérisé en ce que** respectivement un autre creux (5, 5', 7) se terminant à l'intérieur de l'élément de sculpture positif est réalisé de manière axialement latérale par rapport au crampon (2), dans lequel les creux (5, 5', 7) sont diamétralement opposés les uns aux autres en étant séparés par le crampon (2) et sont réalisés en vue de dessus à symétrie spéculaire par rapport à un plan (L) formé par la direction circonférentielle (U) et la direction radiale et passant par l'axe principal du crampon (2).
